# EUROPEAN PATENT SPECIFICATION

(11) **EP 1 961 582 B1**
(45) Date of publication and mention of the grant of the patent: **13.04.2011**
(21) Application number: 08250326.9
(22) Date of filing: 28.01.2008
(51) Int. Cl.: B60B 1/08, B60B 1/12

(54) **Vehicle wheel**
Fahrzeugrad
Roue de véhicule

(30) Priority: 05.02.2007 JP 2007025788
(43) Date of publication of application: 27.08.2008
(73) Proprietor: HONDA MOTOR CO., LTD., Tokyo (JP)
(72) Inventor: Fujita, Masayuki c/o Honda R&D Co. Ltd., Wako-shi Saitama 351-0193 (JP)
(74) Representative: Stevens, Jason Paul

(56) References cited:
- GB-A- 174 986
- JP-A- 7 205 603
- JP-A- 9 104 201
- JP-A- 2002 273 546
- JP-A- 2005 297 688

## Description

The present invention relates to an improvement of a vehicle wheel including a hub portion, spoke portions and a rim portion.

A vehicle wheel is required to be not only stiff against loads of various types but also light in weight. For the reduction in weight of a vehicle wheel, the vehicle wheel is manufactured to have a hollow structure. However, since water may enter the interior of the vehicle with such a hollow structure, the vehicle wheel must be configured to allow the water to be drained off.

A cast wheel for a motorcycle having drain holes is known from the prior art (see, for example, Figures 1 and 2 of Japanese Patent Application Laid-open Publication No. 2005-297688).

Document JP 09 104 201 forms the closest prior art according to the preamble of claim 1.

Figures 1 and 2 of this document show a cast wheel for motorcycle which includes: a hub portion 1 into which an axle is inserted; three spoke portions 3, 3, 3 extending radially from the hub portion 1; and a rim portion 2 connected to tip ends of these spoke portions 3, 3, 3. Each of the spoke portions 3 has a hollow portion 3c enclosed with a thin wall portion 3a having a substantially uniform thickness, and a pair of through holes 3b, 3b are formed in the thin wall portion 3a at positions close to the rim portion 2.

If water enters the above-described hollow portion 3c of the wheel, the water can be drained off through the pair of through holes 3b, 3b.

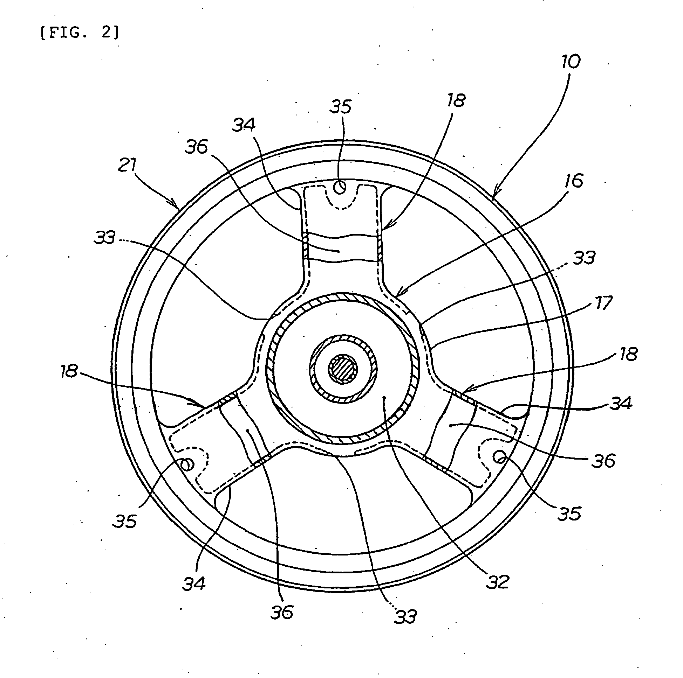

However, the pair of through holes 3b, 3b are formed in the thin wall portion 3a at a certain distance apart from the rim portion 2. When the pair of through holes 3b, 3b are on the lower side in Fig. 2, water collects up to the level corresponding to the aforementioned distance in the interior of the spoke portion 3 provided with the through holes 3b, 3b. Accordingly, rust is apt to be formed on the inner surface of the spoke portion 3. This is likely to cause the wall of each of the spoke portions 3 to be reduced in thickness. As a result the spoke portions 3 may be decreased in strength in some cases. In order to prevent this problem, there is a demand for developing a wheel having improved drainability of water entering a hollow portion.

It is an object of at least the preferred embodiments of the present invention to provide a wheel having improved drainability of water entering a hollow portion.

According to a first aspect of the present invention, there is provided is a vehicle wheel including: a hub portion into which an axle of an vehicle is inserted; a plurality of spoke portions extending radially from the hub portion, and each having hollow structure; and a rim portion which is connected to a tip end of each of these spoke portions, and which supports a tire. The vehicle wheel is characterized in that a water-discharge hole is formed in the tip end part of each of the spoke portions so as to allow water which enters a hollow portion of each of the spoke portions to be drained off, while the wall of each of the spoke portions is thickened only in a part where the water-discharge hole is formed.

Because the pair of water-discharge holes is formed in the tip end part of each of the spoke portions so as to allow the water which enters the hollow portion of each of the spoke portions to be drained off, no water shall remain in the hollow portion of each of the spoke portions. As a result, it is possible to provide a rear wheel having improved drainability of water entering a hollow portion thereof.

Moreover, a wall of each of spoke portions is thickened only in a part where water-discharge holes are formed so that stiffness of the spoke portions can be ensured.

Preferably, the vehicle is a motorcycle, and the wall of each of the spoke portions is partly thickened in a manner that the hollow-portion-side surface of the thickened wall has a convex shape. Accordingly, the increased thickness does not affect the aesthetic surfaces of the spoke portions and the appearances of the spoke portions are improved (and thus the motorcycle) can be improved.

In a further preferred form, the spoke portions are each formed to have a tapered shape toward the rim portion as viewed from a side of the vehicle. Thus, the wheel can be lighter in weight than a vehicle wheel having spoke portions formed to have a constant width toward the rim portion.

In a further preferred form, the wheel has the following characteristics. The hub portion includes: an inner hollow portion into which the axle is inserted; and an outer hollow portion that encloses the inner hollow portion, and that is communicated with each of the hollow portions of the spoke portions. The outer hollow portion is enclosed with a pair of side walls and an outer peripheral wall connected to these side walls, a drain hole is formed in a first one of the pair of side walls, the first one being adjacent to a brake disc, the first side wall and the outer peripheral wall are continuously connected to each other through an inclined wall. Water drained off through the drain hole flows between the first side wall and the brake disc and thereafter flows into a wide passage between the inclined wall and the brake disc. Accordingly, when a large amount of water flows into the outer hollow portion, the water drained off through the drain hole can flows into the wide passage. Consequently it is possible to provide a vehicle wheel which allows the large amount of entering water to be drained off.

Preferably, a sensor ring for detecting wheel speed is attached to the brake disc with a bolt, in a manner that the tip of the bolt projected from the brake disc faces the inclined wall. Thus, the inclined wall for avoiding interference between the side wall adjacent to the brake disc and the bolt is also utilized for further improving drainability of a vehicle wheel.

Preferred embodiments of the invention will now be described by way of example only, and with reference to the accompanying drawings, in which:
Fig. 1 is a cross-sectional view of a vehicle wheel according to a first embodiment of the present invention;
Fig. 2 is a cross-sectional view taken along a line 2-2 of Fig. 1;
Fig. 3 is a view of a modified version of the embodiment of Fig. 2; and
Fig. 4 is a view of a further modified version of the embodiment of Fig. 1.

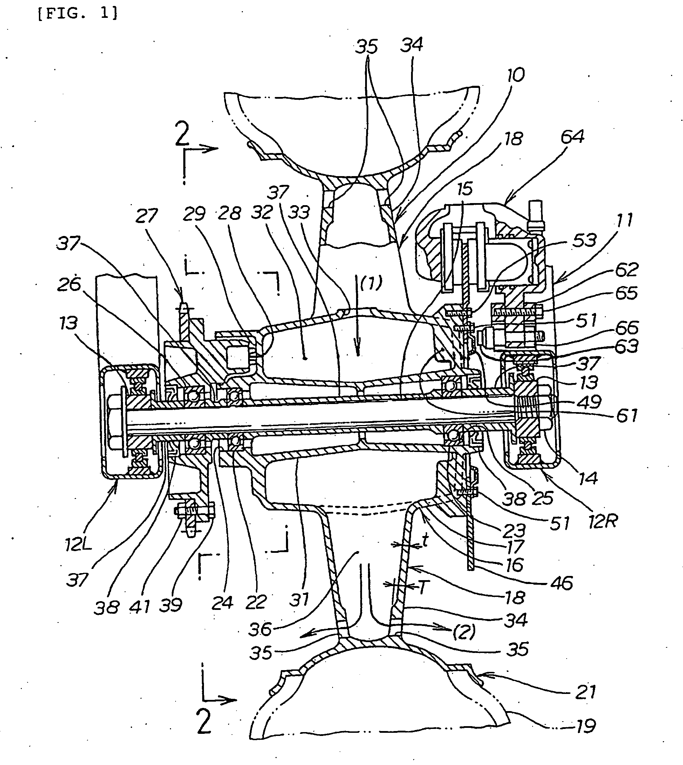

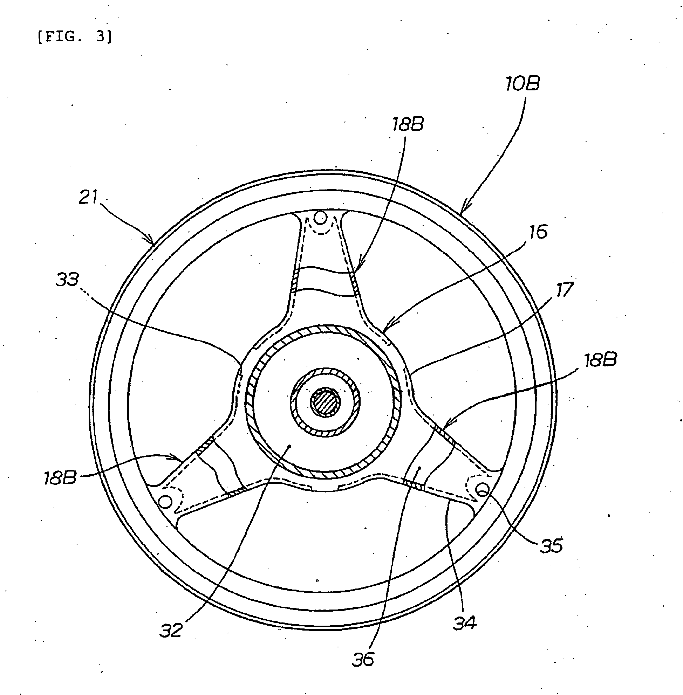

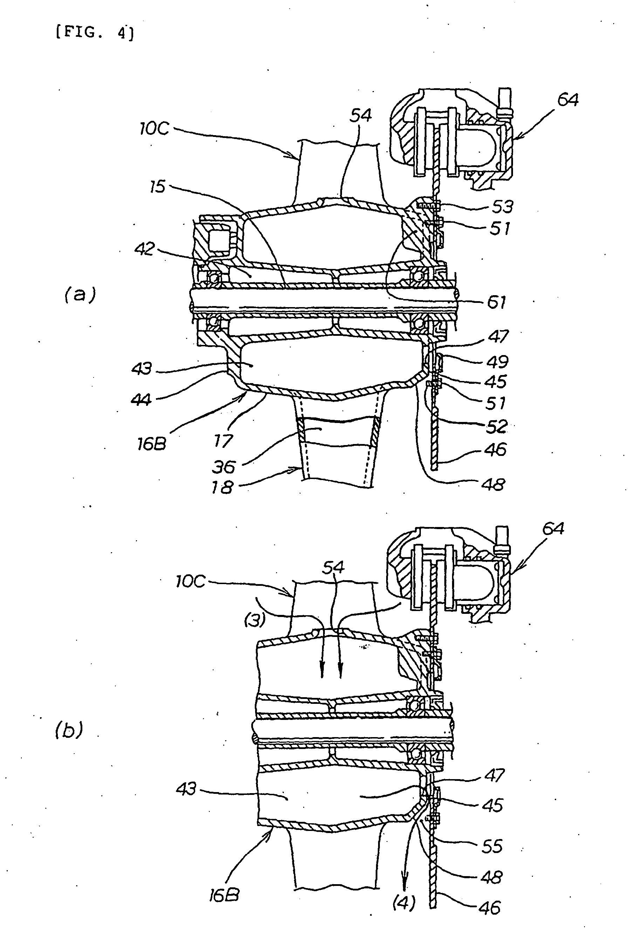

Hereinafter, descriptions will be given as to a preferred embodiment of the present invention with reference to accompanying drawings. Incidentally, a description of the invention according to claim 1 will be given mainly with reference to Fig. 1; a description of the invention according to claim 2 is given mainly with reference to Fig. 1; a description of the invention according to claim 3 is given mainly with reference to Fig. 3; a description of the invention according to claim 4 is given mainly with reference to Fig. 4; and a description of the invention according to claim 5 is given mainly with reference to Fig. 4.

Fig. 1 is a cross-sectional view of a vehicle wheel according to the present invention, and descriptions will be given of an example in which a vehicle is a motorcycle and a wheel is a rear wheel.

A rear wheel 10 includes a hub portion 16, three spoke portions 18, 18, 18 (to be specifically described later), and a rim portion 21. Into the hub portion 16 is inserted an axle 15, which is inserted into support blocks 13, 13 respectively of rear swing arms 12L and 12R both connected to a main body of a motorcycle 11, and which is also attached to the rear swing arm 12R with a nut 14. The three spoke portions 18, 18, 18 extend in the up and down direction in Fig. 1 from an outer peripheral wall 17 formed on the outermost periphery of the hub portion 16, and each have a hollow structure. The rim portion 21 is connected to tip ends of these spoke portions 18, 18, 18, and supports a tire 19.

Moreover, the hub portion 16 is provided with a left bearing fitting hole 24, a right bearing fitting hole 25, multiple power transmission holes 29, and three holes 33, 33, 33 (to be specifically described later). Into the left bearing fitting hole 24 and the right bearing fitting hole 25, respectively, are fitted a left bearing 22 and a right bearing 23 for supporting the axle 15. Into the multiple power transmission holes 29 is fitted a flanged driven sprocket wheel 27 with multiple buffer materials 28 interposed in between. Here, the flanged driven sprocket wheel 27 is placed between the rear swing arm 12L and the hub portion 15, and is attached to the axle 15 with a bearing 26. The circumferential-shaped hollow portion 32 is placed on the radially outer side of the axle 15 with a cylindrical intermediate partition wall 31 in between, the cylindrical intermediate partition wall 31 being formed on the radially outer side of the axle 15. The three holes 33, 33, 33 are formed in the outer peripheral wall 17 to be connected to the hollow portion 32.

In addition, the hub portion 16 is provided with a brake disc 46, a sensor ring 49, a speed sensor 63, and a caliper 64. The brake disc 46 is attached to a thick side wall 61, which is formed to be continuously connected to the outer peripheral wall 17 on the right side of Fig. 1, with multiple brake disc attaching bolts 53. The sensor ring 49 is a sensor for detecting wheel speed, and is attached to the thick side wall 61 with multiple sensor attaching bolts 51 so as to overlap with the brake disc 46. The speed sensor 63 is placed close to the sensor ring 49 and is supported by a support member 62 placed on the rear swing arm 12R. The caliper 64 straddling the brake disc 46 is placed above the speed sensor 63, and is supported by the support member 62.

A tip end part 34 of each of the spoke portions 18 is provided with two water-discharge holes 35, 35, and a wall of each of spoke portions 18 is thickened only in the tip end part 34.

In addition, a wall of each of the tip end parts 34 is thickened in a manner that its surface against the hollow portion 36 has a convex shape. Here, the hollow portion 36 is formed in the interior of the spoke portion 18 and is connected to the hollow portion 32 of the hub portion 16.

Incidentally, when the wall thickness of each of the tip end parts 34 is denoted by T, while that of the rest part of each of the spoke portions 18 is denoted by t, T is preferably set in a range of (1.1 x t) ≤ T ≤ (2.0 x t). A reduction in strength due to the formation of water-discharge holes 35 is compensated by partly thickening the wall of each of spoke portions 18.

In addition, a reference numeral 37 denotes a spacing member, 38 denotes an oil seal, 39 denotes a sprocket wheel attaching bolt, 41 denotes a sprocket wheel attaching nut, 65 denotes a connecting bolt, and 66 denotes a sensor attaching nut.

Power supplied from an engine (not illustrated) is transmitted to the flanged driven sprocket wheel 27 through a drive sprocket wheel and a chain and thereby the rear wheel 10 can be rotated. When the rear wheel 10 is being rotated, the rear swing arms 12L, 12R, the axle 15, an inner ring of the left bearing 22, an inner ring of the right bearing 23, an inner ring of the bearing 26, multiple spacing members 37, the speed sensor 63 and the caliper 64 are in a stationary state, while the flanged driven sprocket wheel 27, an outer ring of the bearing 26, the rear wheel 10, an outer ring of the left bearing 22, an outer ring of the right bearing 23, the oil seals 38, 38, the brake disc 46 and the sensor ring 49 are rotated.

Fig. 2 is a cross-sectional view taken along the line 2-2 of Fig. 1. Three spoke portions 18 extend radially and equiangularly from the outer peripheral wall 17 of the circumferential-shaped hub portion 16, and these spoke portions 18, 18, 18 are connected to the rim portion 21 formed concentrically around the hub portion 16.

Furthermore, a tip end part 34 of each of three spoke portions 18, 18, 18 is provided with water-discharge holes 35, and water entering the interior through the holes 33, 33, 33 formed in the outer peripheral wall 17 of the hub portion 16 is drained off through the water-discharge holes 35 after flowing through the hollow portion 32 of the hub portion 16 and the hollow portion 36 of the spoke portion 18.

Incidentally, although the above has explained the case where the number of spoke portions is three, four or more spoke portions may be possible, and the number of spoke portions is not particularly limited.

An operation of the rear wheel 10 having the above-described structure will be next explained.

Referring back to Fig. 1, when water enters the hollow portion 32 of the hub portion 16 through one of the holes 33 of the hub portion 16 as shown by an arrow (1), then the entering water flows into the hollow portion 36 of one of the spoke portions 18 that is below the hub portion 16 since the hollow portion 32 of the hub portion 16 has a circumferential shape. Thereafter, the entering water is drained off through two water-discharge holes 35, 35 as shown by an arrow (2).

Accordingly, because the rear wheel 10 is configured so that water entering the hollow portion 36 of each of the spoke portions 18 can be drained off by forming the water-discharge holes 35, 35 in the tip end part 34 of the spoke portion 18, no water shall remain in the hollow portion 36 of each of spoke portions 18. As a result, it is possible to provide a rear wheel 10 having improved drainability of water entering the hollow portion 36. Moreover, a wall of each of spoke portions 18 is thickened only in the tip end parts 34 where the water-discharge holes 35, 35 are formed so that stiffness of the spoke portions can be ensured.

In addition, the vehicle is a motorcycle, and a wall of each of the spoke portions 18 is partly thickened in a manner that the surface against the hollow portion 36 of the thickened wall has a convex shape. Accordingly, the increased thickness does not affect the aesthetic surfaces of the spoke portion 18, and the appearances of the spoke portions 18 are improved. Accordingly, the appearance of the motorcycle can be improved.

Besides an improved appearance, a high-speed capability is required for vehicles including a motorcycle. One method for achieving a high-speed capability is reducing body weight. Hereinafter, descriptions will be given of an embodiment in which the rear wheel 10 is reduced in weight.

Fig. 3 is a view of a modified embodiment of Fig. 2. The components in common with Fig. 2 are denoted by the same reference numerals, and explanation thereof is omitted.

Spoke portions 18B of a rear wheel 10B are characterized by being formed to have a tapered shape toward a rim portion 21 as viewed from a side of a motorcycle as a vehicle (reference numeral 11 in Fig. 1). Accordingly, the spoke portions 18B can be lighter in weight than spoke portions formed to have a constant width toward the rim portion 21.

The aforementioned rear wheel 10 or 10B is configured so that water entering the hollow portion 36 of each of the spoke portions 18 or 18B can be drained off through the water-discharge holes 35. However, in the case where a large amount of water flows into the hollow portion 32 of the hub portion 16, the water would be extremely efficiently drained off if a direct water drainage from the hub portion 16 is available. An explanation will be next given of an embodiment in which a hub portion 16 is provided with a drain hole.

Figs. 4(a) and 4(b) are views of a modified embodiment of Fig. 1. The components in common with Fig. 1 are denoted by the same reference numerals, and explanation thereof is omitted.

In Fig. 4(a), a hub portion 16B of a rear wheel 10C includes an inner hollow portion 42 into which a axle 15 is inserted and a circumferential-shaped outer hollow portion 43 that encloses the inner hollow portion 42 and communicates with each of hollow portions 36 of spoke portions 18. The outer hollow portion 43 is enclosed with a pair of side walls 44, 45 and an outer peripheral wall 17 connected to these side walls 44, 45. A drain hole 47 is formed in the side wall 45, which is one of the pair of side walls 44, 45 that is adjacent to a brake disc 46. The side wall 45 and the outer peripheral wall 17 are continuously connected to each other through an inclined wall 48.

Furthermore, a sensor ring 49 for detecting wheel speed is attached to the brake disc 46 with a sensor attaching bolt 51, and a tip 52 of the sensor ring attaching bolt projected from the brake disc 46 faces the inclined wall 48.

In Fig. 4(b), when water enters the outer hollow portion 43 through one of the holes 54 formed in the outer periphery wall 17 to be connected to the outer hollow portion 43 as shown by an arrow (3), then the entering water flows into the lower part of the outer hollow portion 43 since the outer hollow portion 43 has a circumferential shape. Then the entering water is drained off through the drain hole 47 as shown by an arrow (4). Thereafter, the water further flows between the side wall 45 and the brake disc 46, and then flows into a wide passage 55 between the inclined wall 48 and the brake disc 46.

Thus, the hub portion 16B is configured so that the drain hole 47 is formed in the side wall 45 that partly forms the outer hollow portion 43 , that the side wall 45 and the outer peripheral wall 17 are continuously connected to each other through the inclined wall 48, and that water drained off through the drain hole 47 flows between the side wall 45 and the brake disc 46, and thereafter flows into the wide passage 55 between the inclined wall 48 and the brake disc 46. Accordingly when a large amount of water flows into the outer hollow portion 43, the water drained off through the drain hole 47 can flow into the wide passage 55. Consequently it is possible to provide a rear wheel 10C, which allows the large amount of entering water to be drained off.

The tip 52 of the sensor ring attaching bolt projected from the brake disc 46 faces the inclined wall 48. Thus, the inclined wall 48 for avoiding interference between the side wall 45 and the sensor ring attaching bolt 51 is also utilized for further improving drainability of the rear wheel 10C.

Incidentally, although the vehicle wheel used in the present invention is a rear wheel of a motorcycle according to the above-described embodiments, the present invention can also be applied to a front wheel of a motorcycle or to wheels of a three-wheel or four-wheel vehicle. The present invention can be safely applied to wheels of general vehicles.

## Claims

1. A vehicle wheel comprising:
a hub portion (16, 16B) into which an axle (15) of a vehicle is inserted;
a plurality of spoke portions (18, 18B) extending radially from the hub portion (16, 16B), and each having a hollow structure; and
a rim portion (21) which is connected to a tip end (34) of each of these spoke portions (18, 18B), and which supports a tire (19); and
a water-discharge hole (35) is formed in the tip end part (34) of each of the spoke portions (18, 18B) so as to allow water which enters a hollow portion (36) of each of the spoke portions (18, 18B) to be drained off, **characterized in that** the wall of each of the spoke portions (18, 18B) is thickened only in a part where the water-discharge hole (35) is formed.

2. The vehicle wheel according to claim 1, wherein the vehicle is a motorcycle and the wall of each of the spoke portions (18, 18B) is partly thickened in a manner that the hollow-portion-side surface of the thickened wall has a convex shape.

3. The vehicle wheel according to claim 1 or 2, wherein the spoke portions (18, 18B) are each formed to have a tapered shape toward the rim portion (21) as viewed from a side of the vehicle.

4. The vehicle wheel according to claim 1,
wherein the hub portion (16, 16B) includes: an inner hollow portion (42) into which the axle (15) is inserted; and an outer hollow portion (43) that encloses the inner hollow portion (42), and that is communicated with each of the hollow portions (36) of the spoke portions (18, 18B),
wherein the outer hollow portion (43) is enclosed with a pair of side walls (44, 45) and an outer peripheral wall (17) connected to these side walls (44, 45), a drain hole (47) is formed in a first one (45) of the pair of side walls (44, 45), the first one (45) being adjacent to a brake disc (46), and the first side wall (45) and the outer peripheral wall (17) are continuously connected to each other through an inclined wall (48), and
wherein water drained off through the drain hole (47) flows between the first side wall (45) and the brake disc (46), and thereafter flows into a wide passage (55) between the inclined wall (48) and the brake disc (46).

5. The vehicle wheel according to claim 4, wherein a sensor ring (49) for detecting wheel speed is attached to the brake disc (46) with a bolt (51), in a manner that the tip (52) of the bolt (51) projected from the brake disc (46) faces the inclined wall (48).

## Patentansprüche

1. Fahrzeugrad, umfassend
- einen Nabenabschnitt (16, 16B), in welchen eine Achse (15) eines Fahrzeugs eingefügt ist;
- eine Mehrzahl von Speichenabschnitten (18, 18B), die sich radial von dem Nabenabschnitt (16, 16B) erstrecken und von denen jeder eine Hohlstruktur aufweist; und
- einen Randabschnitt (21), der mit einem Spitzenende (34) von jedem dieser Speichenabschnitte (18, 18B) verbunden ist und der einen Reifen (19) stützt; und
- ein Wasserabflussloch (35), das in dem Spitzenende-Abschnitt (34) von jedem der Speichenabschnitte (18, 18B) gebildet ist, so dass es Wasser, das in einen Hohlabschnitt (36) von jedem der Speichenabscfinitte (18, 18B) eintritt, möglich ist, abzufließen, **dadurch gekennzeichnet, dass**
die Wand von jedem der Speichenabschnitte (18, 18B) nur in einem Abschnitt verdickt ist, in welchem das Wasserabflussloch (35) gebildet ist.

2. Fahrzeugrad nach Anspruch 1, wobei das Fahrzeug ein Motorrad ist und die Wand von jedem der Speichenabschnitte (18, 18B) derart teilweise verdickt ist, dass die hohlabschnittseitige Fläche der verdickten Wand eine konvexe Gestalt aufweist.

3. Fahrzeugrad nach Anspruch 1 oder 2, wobei die Speichenabschnitte (18, 18B) jeweils so gebildet sind, dass sie von einer Seite des Fahrzeugs aus betrachtet eine verjüngte Gestalt zu dem Randabschnitt (21) hin aufweisen.

4. Fahrzeugrad nach Anspruch 1, wobei der Nabenabschnitt (16, 16B) umfasst: einen Innenhohlabschnitt (42), in welchen die Achse (15) eingefügt ist, und einen Außenhohlabschnitt (43), der den Innenhohlabschnitt (42) umgibt und der mit jedem der Hohlabschnitte (36) der Speichenabschnitte (18, 18B) in Verbindung steht,
wobei der Außenhohlabschnitt (43) von einem Paar von Seitenwänden (44, 45) und einer Außenumfangswand (17) umgeben ist, die mit diesen Seitenwänden (44, 45) verbunden sind, wobei ein Abflussloch in einer ersten (45) von dem Paar von Seitenwänden (44, 45) gebildet ist, wobei die erste Seitenwand (45) einer Bremsscheibe (46) benachbarte ist und wobei die erste Seitenwand (45) und die Außenumfangswand (17) durch eine geneigte Wand (48) durchgehend miteinander verbunden sind, und wobei durch das Abflussloch (47) abgeflossenes Wasser zwischen der ersten Seitenwand (45) und der Bremsscheibe (46) fließt und danach ihn einen breiten Durchgang (55) zwischen der geneigten Wand (48) und der Bremsscheibe (46) fließt.

5. Fahrzeug nach Anspruch 4, wobei ein Sensorring (49) zum Detektieren einer Radgeschwindigkeit an der Bremsscheibe (46) mit einem Bolzen (51) derart befestigt ist, dass die von der Bremsscheibe (46) vorstehende Spitze (52) des Bolzens (51) der geneigten Wand (48) zugewandt ist.

## Revendications

1. Roue de véhicule comprenant :
une portion de moyeu (16, 16B) dans laquelle un essieu (15) d'un véhicule est inséré ;
une pluralité de portions de rayon de roue (18, 18B) s'étendant radialement depuis la portion de moyeu (16, 16B) et ayant chacune une structure creuse ; et
une portion de jante (21) qui est raccordée à un bout (34) de chacune de ces portions de rayon de roue (18, 18B) et qui supporte un pneu (19) ; et
un trou d'évacuation d'eau (35) est formé dans la partie de boue (34) de chacune des portions de rayon de roue (18, 18B) de façon à permettre à l'eau qui entre dans une portion creuse (36) de chacune des portions de rayon de roue (18, 18B) d'être purgée, **caractérisée en ce que** la paroi de chacune des portions de rayon de roue (18, 18B) n'est épaissie que dans une partie où le trou d'évacuation d'eau (35) est formé.

2. Roue de véhicule selon la revendication 1, dans laquelle le véhicule est un motocycle et la paroi de chacune des portions de rayon de roue (18, 18B) est en partie épaissie de manière telle que la surface côté portion creuse de la paroi épaissie ait une forme convexe.

3. Roue de véhicule selon la revendication 1 ou 2, dans laquelle les portions de rayon de roue (18, 18B) sont chacune formées de façon à avoir une forme effilée vers la portion de jante (21) vue depuis un côté du véhicule.

4. Roue de véhicule selon la revendication 1, dans laquelle la portion de moyeu (16, 16B) inclus :
une portion creuse interne (42) dans laquelle l'essieu (15) est inséré ; et une portion creuse externe (43) qui renferme la portion creuse interne (42), et qui communique avec chacune des portions creuses (36) des portions de rayon de roue (18, 18B),
où la portion creuse externe (43) est enfermée avec une paire de parois latérales (44, 45) et une paroi périphérique externe (17) raccordée à ces parois latérales (44, 45), un orifice de purge (47) est formé dans une première paroi latérale (45) de la paire de parois latérales (44, 45), la première paroi latérale (45) étant adjacente à un disque de frein (46) et la première paroi latérale (45) et la paroi périphérique externe (17) sont raccordées en continu l'une à l'autre par l'intermédiaire d'une paroi inclinée (48), et
où l'eau purgée à travers l'orifice de purge (47) s'écoule entre la première paroi latérale (45) et le disque de frein (46), puis s'écoule dans un passage large (55) situé entre la paroi inclinée (48) et le disque de frein (46).

5. Roue de véhicule selon la revendication 4, dans laquelle une bague de capteur (49) permettant de détecter la vitesse de roue est attachée au disque de frein (46) avec un boulon (51), de telle manière que le bout (52) du boulon (51) faisant saillie depuis le disque de frein (46) soit en regard de la paroi inclinée (48).
